# FASCICULE DE BREVET EUROPEEN

(11) **EP 2 161 227 B1**
(45) Date de publication et mention de la délivrance du brevet: **20.07.2011**
(21) Numéro de dépôt: 09364006.8
(22) Date de dépôt: 03.09.2009
(51) Int. Cl.: B65G 47/90

(54) **Dispositif de préhension pour la manipulation de produit de consommation notamment des boites à oeufs**
Greifvorrichtung zum Bewegen von Verbrauchsprodukten, insbesondere Eierkartons
Gripping device for handling a consumer product, in particular egg cartons

(30) Priorité: 05.09.2008 FR 0804866
(43) Date de publication de la demande: 10.03.2010
(73) Titulaire: Jan, Jérémy, 22960 Pledran (FR)
(72) Inventeur: Jan, Jérémy, 22960 Pledran (FR)
(74) Mandataire: Texier, Christian

(56) Documents cités:
- EP-A- 1 832 534
- US-A1- 2002 005 646

## Description

L'invention concerne un dispositif de préhension pour déplacer au moins une unité parmi des conditionnements de biens de consommation, tels que des conteneurs ou des boites d'oeufs, depuis un point A à un point B, en fixant le préhenseur au bout d'un bras robotisé.

Selon l'invention, le préhenseur comporte un bloc central fixé au robot, sur ce bloc coulisse verticalement un élément inférieur, et horizontalement des éléments de liaison sur lesquels pivotent les mâchoires. L'élément inférieur est lié aux mâchoires par des paires de bielle. Le rapprochement du bloc central et de l'élément inférieur, appliquent aux bielles un mouvement circulaire qui entraîne l'écartement des éléments de liaison, et le pivotement des mâchoires, la taille des bielles définie l'amplitude de la rotation des mâchoires. Quand le bloc central et l'élément inférieur sont en contact, un dispositif maintient le préhenseur fermé, une impulsion électrique ouvre le préhenseur en désactivant le dispositif.

On connaît de nombreux modes de réalisation de tels préhenseur.
A cet égard on pourra par exemple se référer aux documents EP 1 285 870 B1, EP 1 502 884 B1 ou EP1 832 534 A1, ce dernier décrivant un dispositif selon le préambule de la revendication 1.

L'invention va être maintenant décrite avec plus de détails, en se référant à un mode de réalisation donné à titre d'exemple et représenté sur les dessins.
La fig. 1 est une coupe d'une partie du préhenseur selon l'invention, par un plan vertical passant par un coulisseau horizontal de ce préhenseur. Cette dernière étant en position telle qu'elle ne serre pas l'élément à manipuler qui dans le cas de l'exemple décrit est une boite d'oeufs.
La fig. 2 est une coupe analogue à celle représentée sur la fig. 1 le préhenseur étant en position de prise de l'élément pour l'amener hors du point A.
La fig. 3 est une vue en trois dimensions montrant l'ensemble du préhenseur selon l'invention.

Le préhenseur selon l'invention comporte un dispositif de maintien type électroaimant, vérin pneumatique ou autre système (14) et un bloc central, fixé sur un bras robotisé.

Le bloc central (1) est traversé verticalement par des coulisseaux (3) fixés sur le bloc inférieur (2), et également traversé horizontalement par des coulisseaux (5) fixés sur le bloc (4) à coté du bloc (1).

Sur le bloc (4) est monté, pivotant autour de l'axe (6), le support mâchoire (7), et deux bielles (10).

Sur le bloc inférieur (2) est monté, pivotant autour de l'axe (12), des bielles (10) identiques.

Pendant le rapprochement vertical du bloc (2) par rapport au bloc (1), les bielles (10) obligent le bloc (4) à s'éloigner du bloc (1). Quand le bloc (2) rentre en contact avec le bloc (1), le dispositif (14) les maintient solidaire, une impulsion électrique envoyée au dispositif de maintien (14) permet de les désolidariser.

Des bielles (9) sont liées à une extrémité au support mâchoire (7) par l'axe (8) et de l'autre extrémité au bloc (2) par l'axe (11).

Pendant l'éloignement du bloc (4) par rapport au bloc (1), les bielles (9) liées au bloc (2) par l'axe (11), obligent le support mâchoire (7) lié également aux bielles (9), à se refermer.

L'objet (A) a prendre rentre en contact avec le bloc (2) et l'oblige à se rapprocher du bloc 1, les bielles (10) entraînent l'éloignement du bloc (4) par rapport au bloc (1), les bielles (9) font pivoter le support mâchoire (7) par rapport à l'axe (6).

Le mouvement des mâchoires (13) décrit un cercle autour de l'objet (A), la combinaison d'éloignement du bloc (4) et la rotation du support mâchoires (7) autour de l'axe (6), permet de garder une distance limitée entre les mâchoires du préhenseur, pour permettre par exemple de prendre ou déposer l'objet (A) dans un carton.

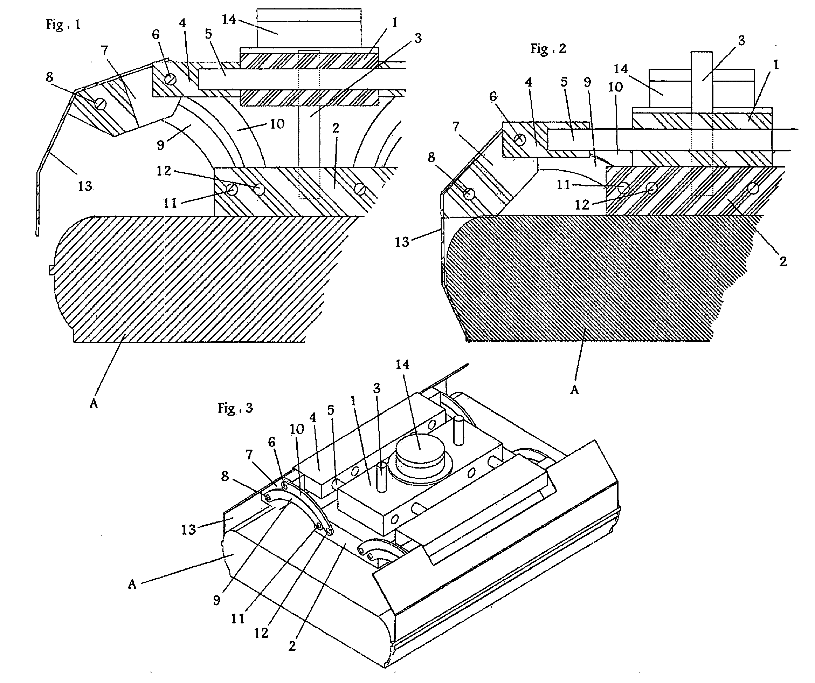

Le préhenseur est tout d'abord dans la position représentée sur la fig. 1, le bloc (2) n'est pas en contact avec le bloc (1), le bloc (4) est en buté sur le bloc (1), le dispositif de maintien (14) est inactif, les mâchoires sont grandes ouvertes. Le bras robotisé amène le préhenseur au dessus de l'objet (A), l'incline entre 10° et 45°, met la mâchoire (13) en contact à mi-hauteur de l'objet (A), pour le mettre en référence. Le bras robotisé remet le préhenseur à l'horizontal au dessus le l'objet (A), la descend, afin que le bloc (2) prenne appui sur la partie supérieur de l'objet (A).

Le bloc (2) se rapproche du bloc (1) en suivant les coulisseaux (3), les bielles (10) pivotent autour de l'axe (12), poussent le bloc (4) par l'axe (6), ce qui a pour effet d'éloigner le bloc (4) du bloc (1) en suivant les coulisseaux (5), simultanément les bielles (9) pivotent autour de l'axe (11), maintenant le support mâchoire (7) par l'axe (8), l'éloignement de l'axe (6) et le maintient de l'axe (8) par rapport au bloc (1), entraîne la rotation du support mâchoire (7) autour de l'axe (6). Lorsque le bloc (2) entre en contact avec le bloc (1), ils se solidarisent par l'effet du le dispositif de maintien (14).

Le bras robotisé se soulève en emportant l'objet (A), pour venir le déposé a l'endroit voulu. Le bras robotisé approche l'objet (A) du sol, et envoie une impulsion au dispositif de maintien , pour désolidariser le bloc (2) du bloc (1). L'objet (A) par l'effet de gravité tombe au sol, le bloc (2) s'éloigne du bloc (1), rapproche le bloc (4) et le support mâchoire (7) pivote pour ouvrir les mâchoires.
Le dégagement vertical du préhenseur par le bras robotisé, permet de finaliser l'ouverture des mâchoires (13), le bloc (2) n'étant plus en contact avec l'objet (A), la gravité éloigne le bloc (2) du bloc (1), le bloc (4) bute sur le bloc (1).

Le préhenseur qui vient d'être décrite ne nécessite donc aucune intervention humaine, et une simple impulsion au dispositif de maintient (14), ouvre les mâchoires de préhenseur.

Bien entendu l'invention n'est pas limitée par les détails du mode de réalisation qui vient d'être décrit, ceux-ci pourraient être modifiés sans sortir de cadre de l'invention.
Par exemple, le bloc (2) pourrait comporter un dispositif de réglage par vis qui changeraient la distance entre la partie coulisseaux (3) des axes (11) et (12), le réglage des longueurs des bielles par des lumière allongées et des boulons de fixation, ou modifier les mâchoires pour épouser parfaitement la forme de objet, ou pouvoir éloigner les mâchoires l'une de l'autre.

Autre caractéristique technique du préhenseur pour le déplacement au moins un bloc unitaire (A), notamment d'emballage individuel fragile, pouvant être fixé sur le bras d'un robot de manutention et actionnable par celui-ci caractérisé en ce qu'il comporte :
- un bloc fixe (1) intégrant des moyens de maintien (14), qui peut être fixé sur l'extrémité d'un bras de robot, et qui est traversé par des coulisseaux verticaux,
- un bloc mobile (2) fixé sur l'extrémité inférieure des coulisseaux verticaux et apte à venir en contact avec le bloc unitaire (A), après coulissement,
- des paires de couples de bielles (9,10) opposées 2 à 2 , fixées de manière rotative sur des bords latéraux opposés du corps (2)
- des coulisseaux horizontaux dans le bloc fixe dont les extrémités sont liées aux extrémités libres des bielles,
- des moyens de préhension (13) positionnés à l'extrémité libre des bielles, de manière à former sensiblement une pince, après coulissement du bloc (2) provoquant la rotation des bielles, ceux-ci (13) venant enserrer le bloc unitaire (A).
- des moyens de maintien (14) fixés au bloc fixe (1), maintiennent le préhenseur en position fermé, par le fait que le bloc mobile (2) soit en contact avec le bloc fixe (1).

Autre caractéristique technique, les couples de bielles (9,10) sont constitués de 2 bielles dans le même plan, mais fixées sur le bloc 2, sur des axes de rotation décalés (11,12).

Autre caractéristique technique, le système comporte 4 paires de couples de bielles (9,10), opposées 2 à 2, dont les zones de fixation sont réparties sur les sommets d'un rectangle.

Autre caractéristique technique, le bloc fixe (1) supporte l'ensemble des coulisseaux, les coulisseaux verticaux (3) et les coulisseaux horizontaux (3).

Autre caractéristique technique, les coulisseaux horizontaux (5) sont tous montés dans le même plan, au minimum par paire de chaque coté du bloc fixe (1).

Autre caractéristique technique, les coulisseaux verticaux (3) sont montés, au minimum par paire et entre chaque coulisseaux horizontaux (5).

Autre caractéristique technique, le bloc fixe (1) en contact avec le bloc mobile (2) reste solidaire par l'effet du dispositif de maintien (14).

Autre caractéristique technique, les moyens de préhension (13) épousent la forme du bloc unitaire (A) en position fermé.

## Revendications

1. Dispositif de préhension pour le déplacement au moins un bloc unitaire (A), notamment d'emballage individuel fragile, pouvant être fixé sur le bras d'un robot de manutention et actionnable par celui-ci, comportant:
- un bloc fixe (1) intégrant des moyens de maintien (14), qui peut être fixé sur l'extrémité d'un bras de robot, et qui est traversé par des coulisseaux verticaux,
- un bloc mobile (2) fixé sur l'extrémité inférieure des coulisseaux verticaux et apte à venir en contact avec le bloc unitaire (A), après coulissement,
- des paires de couples de bielles (9,10) opposées 2 à 2 , fixées de manière rotative sur des bords latéraux opposés du corps (2)
- des moyens de préhension (13) positionnés à l'extrémité libre des bielles, de manière à former sensiblement une pince, après coulissement du bloc (2) provoquant la rotation des bielles, ceux-ci (13) venant enserrer le bloc unitaire (A), le dispositif étant **caractérisé en ce qu'**il comporte: -des coulisseaux horizontaux dans le bloc fixe dont les extrémités sont liées aux extrémités libres des bielles, et -des moyens de maintien (14) fixés au bloc fixe (1), maintiennent le préhenseur en position fermé, par le fait que le bloc mobile (2) soit en contact avec le bloc fixe (1).

2. Dispositif de préhension selon la revendication 1 **caractérisé en ce que** les couples de bielles (9,10) sont constitués de 2 bielles dans le même plan, mais fixées sur le bloc 2, sur des axes de rotation décalés (11,12).

3. Dispositif de préhension selon l'une quelconque des revendications précédentes, **caractérisé en ce qu'**il comporte 4 paires de couples de bielles (9,10), opposées 2 à 2, dont les zones de fixation sont réparties sur les sommets d'un rectangle.

4. Dispositif de préhension selon la revendication 1 **caractérisé en ce que** le bloc fixe (1) supporte l'ensemble des coulisseaux, les coulisseaux verticaux (3) et les coulisseaux horizontaux (3).

5. Dispositif de préhension selon la revendication 1 ou 4 **caractérisé en ce que** les coulisseaux horizontaux (5) sont tous montés dans le même plan, au minimum par paire de chaque côté du bloc fixe (1).

6. Dispositif de préhension selon la revendication 1, 4 ou 5 **caractérisé en ce que** les coulisseaux verticaux (3) sont montés, au minimum par paire et entre chaque coulisseaux horizontaux (5).

7. Dispositif de préhension selon la revendication 1, 2 ou 4 **caractérisé en ce que** le bloc fixe (1) en contact avec le bloc mobile (2) reste solidaire par l'effet de l'élément du dispositif de maintien (14).

8. Dispositif de préhension selon la revendication 1 **caractérisé en ce que** les moyens de préhension (13) épousent la forme de du bloc unitaire (A) en position fermé.

## Claims

1. Gripper device for moving at least one individual unit (A), notably a fragile individual packaging unit, that can be fixed to the arm of a handling robot and actuated thereby, comprising:
- a fixed unit (1) incorporating holding means (14), which can be fixed to the end of the arm of a robot and through which vertical slides pass,
- a mobile unit (2) fixed to the lower end of the vertical slides and capable of coming into contact with the individual unit (A), after sliding,
- couples of pairs of links (9, 10), facing one another in pairs, fixed rotatably on opposite lateral edges of the body (2),
- gripper means (13) positioned at the free end of the links, so as more or less to form a gripper clamp, after the unit (2) has slid causing the links to rotate, these means (13) then gripping the individual unit (A),
the device being **characterized in that** it comprises:
- horizontal slides in the fixed unit, the ends of which slides are connected to the free ends of the links, and
- holding means (14) fixed to the fixed unit (1), holding the gripper in a closed position through the fact that the mobile unit (2) is in contact with the fixed unit (1).

2. Gripper device according to Claim 1, **characterized in that** the pairs of links (9, 10) consist of two links in the same plane but fixed to the unit (2) on axes of rotation (11, 12) that are offset from one another.

3. Gripper device according to either one of the preceding claims, **characterized in that** it comprises four couples of pairs of links (9, 10) facing one another in pairs, the regions of attachment of which are set out at the vertices of a rectangle.

4. Gripper device according to Claim 1, **characterized in that** the fixed unit (1) supports all the slides, the vertical slides (3) and the horizontal slides (5),

5. Gripper device according to Claim 1 or 4, **characterized in that** the horizontal slides (5) are all mounted in the same plane, at least in pairs on each side of the fixed unit (1).

6. Gripper device according to Claim 1, 4 or 5, **characterized in that** the vertical slides (3) are mounted, at least in pairs and between each horizontal slide (5).

7. Gripper device according to Claim 1, 2 or 4, **characterized in that** the fixed unit (1) in contact with the mobile unit (2) remains attached through the effect of the element of the holding device (14).

8. Gripper device according to Claim 1, **characterized in that** the gripping means (13) hug the shape of the individual unit (A) in the closed position.

## Patentansprüche

1. An dem Arm eines Handhabungsroboters anbringbare und von diesem betätigbare Greifvorrichtung zum Bewegen mindestens eines Einheitsblocks (A), insbesondere einer leicht zerbrechlichen einzelnen Verpackung, mit:
- einem stationären Block (1) mit integrierten Halteeinrichtungen (14), welcher an dem Ende eines Roboterarms angebracht werden kann und durch welchen vertikale Gleitstücke hindurchgehen,
- einem an dem unteren Ende der vertikalen Gleitstücke angebrachten beweglichen Block (2), der nach dem Verschieben in Kontakt mit dem Einheitsblock (A) kommen kann,
- drehbar an gegenüberliegenden Seitenrändern des Körpers (2) angebrachten Paaren von Pleueln (9,10), die sich paarweise gegenüberliegen,
- Greifmitteln (13), die an dem freien Ende der Pleuel angeordnet sind, um im Wesentlichen eine Zange zu bilden, wobei nach der Verschiebung des Blocks (2), die die Drehung der Pleuel bewirkt, diese (13) den Einheitsblock (A) umschließen,
wobei die Vorrichtung **dadurch gekennzeichnet ist, dass** sie aufweist
- horizontale Gleitstücke in dem stationären Block, deren Enden mit den freien Enden der Pleuel verbunden sind, und
- an dem stationären Block (1) angebrachte Halteeinrichtungen (14), die den Greifer **dadurch** in einer geschlossenen Position halten, so dass der bewegliche Block (2) in Kontakt mit dem stationären Block (1) ist.

2. Greifvorrichtung nach Anspruch 1, **dadurch gekennzeichnet, dass** die Pleuel (9, 10) aus zwei Pleueln bestehen, die in derselben Ebene angeordnet sind, aber an beabstandeten Drehachsen (11,12) an dem Block (2) angebracht sind.

3. Greifvorrichtung nach einem der vorstehenden Ansprüche, **dadurch gekennzeichnet, dass** sie vier Paare von Pleueln (9,10) aufweist, die sich paarweise gegenüberliegen und deren Befestigungszonen auf die Ecken eines Rechtecks verteilt sind.

4. Greifvorrichtung nach Anspruch 1, **dadurch gekennzeichnet, dass** der stationäre Block (1) sowohl die vertikalen Gleitstücke (3) als auch die horizontalen Gleitstücke (5) trägt.

5. Greifvorrichtung nach Anspruch 1 oder 4, **dadurch gekennzeichnet, dass** alle horizontalen Gleitstücke (5) in derselben Ebene angebracht solid, zumindest pro Paar an jeder Seite des stationären Blocks (1).

6. Greifvorrichtung nach Anspruch 1, 4 oder 5, **dadurch gekennzeichnet, dass** die vertikalen Gleitstücke (3) zumindest pro Paar und jeweils zwischen horizontalen Gleitstücken (5) angebracht sind.

7. Greifvorrichtung nach Anspruch 1, 2 oder 4, **dadurch gekennzeichnet, dass** durch die Wirkung des Elements der Haltevorrichtung (14) der stationäre Block (1) in festem Kontakt mit dem beweglichen Block (2) bleibt.

8. Greifvorrichtung nach Anspruch 1, **dadurch gekennzeichnet, dass** sich in einer geschlossenen Position die Greifmittel (13) an die Form des Einheitsblocks (A) anpassen.
